# EUROPÄISCHE PATENTSCHRIFT

(11) **EP 1 887 271 B1**
(45) Veröffentlichungstag und Bekanntmachung des Hinweises auf die Patenterteilung: **26.06.2013**
(21) Anmeldenummer: 07113736.8
(22) Anmeldetag: 02.08.2007
(51) Int. Cl.: F16L 25/00

(54) **Dichtring**
Gasket
Bague d'étanchéité

(30) Priorität: 11.08.2006 DE 202006012445 U
(43) Veröffentlichungstag der Anmeldung: 13.02.2008
(73) Patentinhaber: Steinzeug-Keramo GmbH, 50226 Frechen (DE)
(72) Erfinder: Weis, Hans-Jürgen, 50226 Frechen (DE)
(74) Vertreter: von Kreisler Selting Werner

(56) Entgegenhaltungen:
- DE-C1- 4 209 204
- DE-U1- 8 621 422
- NL-C2- 1 018 638
- US-A- 5 709 411

## Beschreibung

Die Erfindung bezieht sich auf einen Dichtring zum Abdichten einer Rohrverbindung zwischen zwei Rohr-Enden, sowie ein Abwasser-Rohr und eine Anordnung aus zwei Abwasserrohren mit derartigen Dichtringen.

Als Dichtringe für Rohrverbindungen zwischen zwei Rohr-Enden von Rohren, insbesondere von Abwasser-Rohren aus Steinzeug, sind im wesentlichen Muffendichtungen und Manschettendichtungen bekannt. Muffendichtungen haben grundsätzlich den Nachteil, dass im Bereich der Dichtung eines der beiden Rohr-Enden aufgeweitet ist. Für die Rohr-Aufweitung wird mehr Rohr-Material benötigt, ist für das Verlegen ein erhöhter Platzbedarf erforderlich und ist insbesondere die Verlegung mittels kostengünstigen Rohrvortriebes ausgeschlossen.

Manschettendichtungen bzw. Überschiebkupplungen erfordern ebenfalls wegen ihres radialen Überstandes im Bereich der Dichtung mehr Platz und sind darüber hinaus wegen ihrer Exponiertheit und mechanischen Empfindlichkeit einer hohen Beschädigungsgefahr ausgesetzt. Bei Rohren mit größeren Fertigungstoleranzen sind große Dichtungsprofilquerschnitte erforderlich. Wegen des radialen Überstandes ist die Überschiebkupplung ebenfalls nicht geeignet für den Rohrvortrieb.

Bei versenkten Überschiebkupplungen, bei denen der Dichtring in einem eingezogenen Absatz am Rohrende angeordnet ist, ist die Wandstärke des Rohres in diesem Bereich reduziert, womit grundsätzlich ein Stabilitätsverlust verbunden ist. Insbesondere bei Rohrvortrieb ist dieser Bereich daher besonders empfindlich für Beschädigungen. Zwar ist die in dem Absatz angeordnete Manschette grundsätzlich versenkt und ragt nicht aus der Zylinder-Kontur der miteinander verbundenen Rohre heraus, jedoch ist die Manschette dennoch außenliegend und daher insbesondere bei Rohrvortrieb anfällig für Beschädigungen.

Ein Dichtring, von dem der Oberbegriff des Patentanspruchs 1 ausgeht, ist beschrieben in NL 10 18 638 A. Dieser Dichtring weist ein elastisches Dichtprofil auf, welches in axialen Nuten der zu verbindenden Rohr eingesetzt wird. Die Axialstege des Hohlprofiles sind durch eine Füllung aus einem harten Kern verstärkt. Einer der Radialstege bildet ein oder zwei Expansionsschlaufen, die zugleich als Abdichtungselement dienen.

In DE 42 09 204 C1 ist ein Dichtring für eine Rohrverbindung beschreiben, der zwei in entgegengesetzte Richtungen weisende Axialstege aufweist. Von den Axialstegen stehen flanschartige Radialstege ab, welche Druckscheiben bilden, die die stirnseitigen Rohrenden getrennt halten. Die Axialstege die eine Metalleinlage enthalten, sind mit den Druckscheiben, die keine Metalleinlage enthalten, aus einem Stück gespritzt.

Aufgabe der Erfindung ist es demgegenüber, einen Dichtring für eine Rohrverbindung zu schaffen, die geschützt ist gegen Beschädigungen, und die einen Rohrvortrieb erlaubt.

Diese Aufgabe wird erfindungsgemäß gelöst mit einem Dichtring mit den Merkmalen des Patentanspruches 1.

Der erfindungsgemäße Dichtring für eine Rohrverbindung zwischen zwei Rohr-Enden, die an ihren Stirnseiten jeweils eine umlaufende Axialnut aufweisen, weist zwei zylindrische Axialstege, die in die Rohr-Axialnuten einsteckbar sind, und einen Radialsteg zwischen den beiden Axialstegen auf, der zwischen den beiden Stirnseiten angeordnet ist und die Stirnseiten voneinander beabstandet. Der Dichtring ist also ausschließlich axial zwischen den beiden Rohr-Enden angeordnet bzw. in die umlaufenden Axialnuten mit seinen Axialstegen eingesteckt. Hierdurch kann der Außendurchmesser der Rohr-Enden glattzylindrisch mit dem gesamten Rohr ausgebildet sein, so dass auch die gesamte Rohrverbindung, von einem Spalt abgesehen, außenseitig glatt und sprungfrei ausgebildet ist. Hierdurch ist eine Anordnung von mehreren Rohren, die mit dem Dichtring miteinander verbunden sind, für den Rohrvortrieb geeignet.

Durch das Einstecken der beiden zylindrischen Axialstege des Dichtringes in entsprechende endseitige Axialnuten der miteinander verbundenen Rohr-Enden ergibt sich eine lange Dichtstrecke, so dass eine zuverlässige und langlebige druckbeständige flüssigkeitsdichte Abdichtung sichergestellt ist.

Gemäß der Erfindung ist der Radialsteg bzw. sind die Radialstege als integrierter Druckübertragungsring ausgebildet. Der Druckübertragungsring dient der Übertragung von Schubkräften zwischen zwei benachbarten Rohr-Enden beim Rohrvortrieb. Der Druckübertragungsring muss hierzu eine gewisse Festigkeit und Elastizität aufweisen. Vorzugsweise ist der Füllungs-Werkstoff in dem als Druckübertragungsring ausgebildeten Radialsteg elastisch und ist verschieden von dem Füllungs-Werkstoff in den Axialstegen.

Der Dichtring weist ein Hohlprofil mit einer Hohlprofil-Wand aus einem Wand-Werkstoff auf, wobei das Hohlprofil im Bereich der Axialstege und des Radialsteges mit einem Füllungs-Werkstoff gefüllt ist, der von dem Wand-Werkstoff verschieden ist. Der Dichtring ist also aus zwei Werkstoffen aufgebaut, einem Wand-Werkstoff und einem Füllungs-Werkstoff. Auf diese Weise kann der Dichtring bezüglich seiner Dichtungseigenschaften einerseits und seiner übrigen mechanischen Eigenschaften, beispielsweise Steifigkeit und Stabilität andererseits, optimal an die gestellten Anforderungen angepasst werden. Beispielswiese kann als Wand-Werkstoff Gummi oder Kunststoff gewählt werden, also ein Werkstoff mit einer hohen Elastizität und Anschmiegsamkeit, um eine gute flüssigkeitsdichte Abdichtung insbesondere in der Rohr-Axialnut sicherzustellen. Als Füllungswerkstoff wiederum kann ein härteres Gummi, ein härtere Kunststoff oder Stahl verwendet werden. Der Füllungs-Werkstoff dient u. a. dazu, dem Dichtring die erforderliche Steifigkeit zu geben, so dass die Montage erleichtert und die Kompressibilität des Dichtringes begrenzt werden, und Querkräfte zwischen den Rohr-Enden zu übertragen.

Grundsätzlich kann der Dichtring im Querschnitt T-förmig ausgebildet sein, kann jedoch auch einen zweiten Radialsteg aufweisen, und im Querschnittsprofil kreuzförmig ausgebildet sein. Bei einer kreuzförmigen Ausbildung des Querschnittsprofils des Dichtringes ist ein Radialsteg radial innen und ein Radialring nach radial außen der beiden Axialstege vorgesehen.

Vorzugsweise sind die Axialstege als Lippendichtung ausgebildet und weisen hierzu ringförmige radiale Dichtlippen auf. Alternativ können die Axialstege auch als dichtlippenfreie Kompressionsdichtungen ausgebildet sein, die als Vollkörper in die Rohr-Axialnuten eingesteckt und dort auf die Nutweite komprimiert werden.

Gemäß dem Anspruch 8 ist ein Abwasserrohr mit zwei Rohr-Enden vorgesehen, die an ihren zwei endseitigen Stirnseiten jeweils eine kreisförmig umlaufende und in ihrem Durchmesser und ihrer Weite gleiche Axialnut aufweisen, wobei die beiden aneinander angrenzenden Rohr-Enden zweier Abwasserrohre mit einem Dichtring gemäß Anspruch 1 miteinander verbunden werden können. Das Abwasserrohr ist vorzugsweise über seine gesamte Länge glattzylindrisch ausgebildet, d. h. im Querschnitt über seine gesamte Länge kreisrund und einen konstanten Durchmesser aufweisend.

Gemäß dem Anspruch 10 ist eine Anordnung aus zwei Abwasserrohren gemäß Anspruch 9 und einem Dichtring gemäß Anspruch 1 beansprucht, also eine Anordnung aus zwei identischen Abwasserrohren, mit jeweils zwei identischen Rohr-Enden, die an der endseitigen Stirnseite jeweils eine umlaufende Axialnut aufweisen, wobei Axialstege des Dichtringes in die Axialnuten eingesteckt sind und ein Radialsteg des Dichtringes zwischen den beiden Stirnseiten der Rohr-Enden angeordnet ist und die Rohr-Enden auf diese Weise beabstandet.

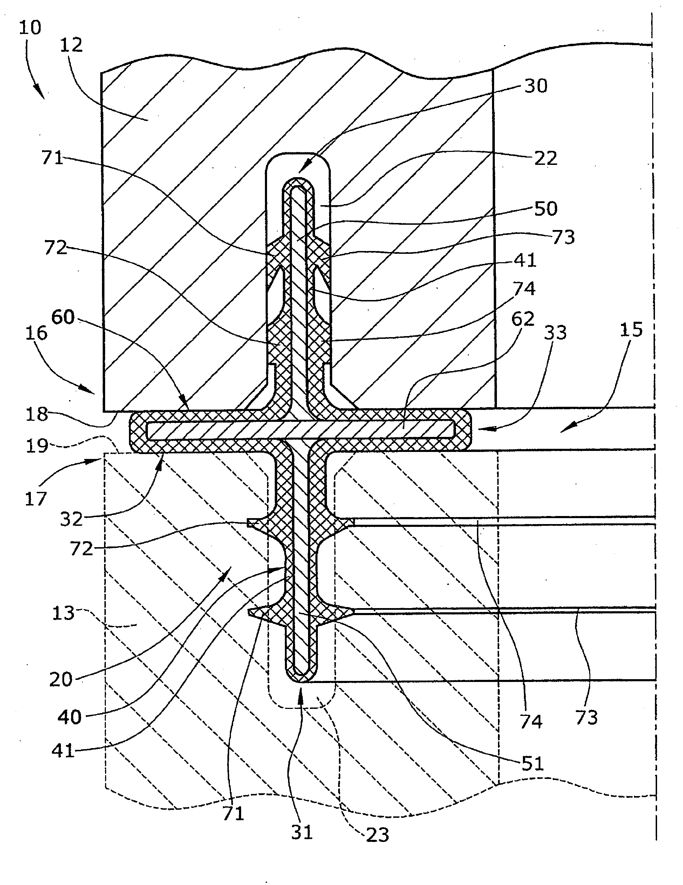

Im Folgenden wird unter Bezugnahme auf die Zeichnung ein Ausführungsbeispiel der Erfindung näher erläutert.

Die Figur zeigt ausschnittsweise zwei Rohr-Enden zweier Abwasser-Rohre, die durch einen Dichtring flüssigkeitsdicht miteinander verbunden sind.

In der Figur ist ausschnittsweise und im Längsschnitt eine Anordnung 10 aus zwei Abwasser-Rohren 12, 13 dargestellt, die mit einem Dichtring 20 flüssigkeitsdicht miteinander verbunden sind. Die beiden Abwasser-Rohre 12, 13 bestehen aus Steinzeug und sind an ihrer Außen- wie an ihrer Innenseite jeweils über ihre gesamte axiale Länge glattzylindrisch ausgebildet.

Die beiden durch den Dichtring 20 miteinander verbundenen Rohr-Enden 16, 17 weisen jeweils eine in einer Querebene liegende Stirnseite 18, 19 auf. An der Stirnseite 18, 19 ist jeweils ungefähr in der radialen Mitte der Stirnseite 18, 19 eine umlaufende Axialnut 22, 23 vorgesehen, die eine Ringnut bildet. Die Axialnut kann jedoch grundsätzlich auch radial weiter außen oder radial weiter innen angeordnet sein. Die Axialnut 22, 23 ist kreisförmig. Die Axialnut 22, 23 in den Rohr-Enden 16, 17 kann jeweils durch Fräsen oder durch Bohren hergestellt werden.

Der Dichtring 20 ist im Querschnittsprofil kreuzförmig ausgebildet und weist zwei miteinander identische zylindrische Axialstege 30, 31 und zwischen den beiden Axialstegen 30, 31 zwei in einer Querebene liegende Radialstege 32, 33 auf. Der äußere Radialsteg 32 ist radial außen und der innere Radialsteg 33 ist radial innen der beiden Axialstege 30, 31 angeordnet.

Die beiden Axialstege 30, 31 sind jeweils in die Axialnuten 22, 23 der beiden Rohr-Enden 16, 17 eingesteckt, während die beiden Radialstege 32, 33 des Dichtringes 20 zwischen den beiden einander gegenüberliegenden Stirnseiten 18, 19 angeordnet sind.

Der Dichtring 20 wird von einem einstückigen Hohlprofil 40 gebildet, das eine Wand 41 aus einem Wand-Werkstoff aufweist, wobei das Hohlprofil 40 im Bereich der beiden Axialstege 30, 31 und der beiden Radialstege 32, 33 gefüllt ist mit Füllungs-Werkstoffen. Als Wand-Werkstoff der Hohlprofil-Wand 41 wird Gummi oder Kunststoff verwendet. Für die Füllungen 50, 51 der Axialstege 30, 31 wird Gummi, Kunststoff oder Stahl verwendet. Der Werkstoff der Axialsteg-Füllungen 50, 51 ist steifer als der Wand-Werkstoff. Die Füllungen 50, 51 der Axialstege 30, 31 dienen im wesentlichen der Versteifung des Dichtringes 20 und der Zentrierung sowie der Übertragung von Querkräften zwischen den beiden Rohr-Enden 16,17.

Der Dichtring 20 weist einen integrierten Druckübertragungsring 60 auf, der im wesentlichen durch eine Hohlprofil-Füllung 62 gebildet ist, die sich von der Hohlprofil-Füllung 50, 51 der Axialstege 30, 31 unterscheidet und bezüglich ihrer mechanischen Eigenschaften an die Anforderungen eines Druckübertragungsringes angepasst ist. Insbesondere ist die Füllung 62 der beiden den Druckübertragungsring 60 bildenden Radialstege 32, 33 hartelastisch. Der Druckübertragungsring 60 dient der Übertragung von Druckkräften insbesondere beim Rohrvorschub und soll dabei eine Beschädigung der Rohr-Enden 16, 17 verhindern.

Die beiden Axialstege 30, 31 sind als Lippendichtung ausgebildet und weisen innenseitig und außenseitige jeweils zwei ringförmige im wesentlichen radiale Dichtlippen 71, 72, 73, 74 auf. Die Axialstege 30, 31 können jedoch auch alternativ als dichtlippenfreie Kompressionsdichtung ausgebildet sein.

Die von den Rohr-Enden 16, 17 und dem Dichtring 20 gebildete Rohrverbindung ist außen glattzylindrisch, von dem Spalt 15 zwischen den beiden Stirnseiten 18, 19 der Rohr 12, 13 abgesehen, und ist daher für Rohrvorschub geeignet.

## Patentansprüche

1. Dichtring (20) für eine Rohrverbindung zwischen zwei Rohr-Enden (16, 17), die an ihren Stirnseiten (18, 19) jeweils eine umlaufende Axialnut (22, 23) aufweisen, mit
zwei zylindrischen Axialstegen (30, 31), die in die Rohr-Axialnuten (22, 23) einsteckbar sind, und
einem Radialsteg (32, 33) zwischen den beiden Axialstegen (30, 31), der geeignet ist die Rohr-Enden (16, 17) zu beabstanden,
wobei das Dichtprofil (20) von einem Hohlprofil (40) mit einer Wand (41) aus einem Wandwerkstoff gebildet wird, wobei das Hohlprofil (40) im Bereich der Axialstege (30, 31) gefüllt ist mit einer Füllung (50, 51), die von dem Werkstoff der Wand (41) des Hohlprofiles (40) verschieden ist,
**dadurch gekennzeichnet, dass**
der Radialsteg (32, 33) als integrierter Druckübertragungsring ausgebildet ist, der ebenfalls eine Füllung (62) enthält, die von dem Werkstoff der Wand (41) des Hohlprofiles (40) verschieden ist.

2. Dichtring (20) nach Anspruch 1, wobei jeweils ein Radialsteg (32, 33) nach radial außen und radial innen der Axialstege (30, 31) vorgesehen ist, so dass das Querschnittsprofil des Dichtringes (20) kreuzförmig ist.

3. Dichtring (20) nach Anspruch 1 oder 2, wobei der Werkstoff der Hohlprofil-Wand (41) Gummi oder Kunststoff ist.

4. Dichtring (20) nach einem der Ansprüche 1 - 3, wobei der Werkstoff der Hohlraum-Füllung (50, 51, 62) Gummi, Kunststoff oder Stahl ist.

5. Dichtring (20) nach einem der Ansprüche 1 - 4, wobei der Werkstoff der Radialsteg-Füllung (62) elastisch und verschieden ist von dem Werkstoff der Füllung (50, 51) in den Axialstegen (30, 31).

6. Dichtring (20) nach einem der Ansprüche 1 - 5, wobei die Axialstege (30, 31) als Lippendichtungen ausgebildet sind und ringförmige radiale Dichtlippen (71, 72, 73, 74) aufweisen.

7. Dichtring (20) nach einem der Ansprüche 1 - 5, wobei die Axialstege als dichtlippenfreie Kompressionsdichtungen ausgebildet sind.

8. Abwasser-Rohr (12, 13) aus Steinzeug, mit zwei identischen Rohr-Enden (16, 17), die an ihren Stirnseiten (18, 19) jeweils eine umlaufende kreisförmige Axialnut (22, 23) gleichen Durchmessers aufweisen, wobei zwei aneinander angrenzende Rohr-Enden (16, 17) zweier Abwasser-Rohre (12, 13) mit einem Dichtring (20) gemäß einem der Ansprüche 1 - 7 miteinander verbunden werden können.

9. Abwasser-Rohr (12, 13) nach Anspruch 8, wobei das Abwasser-Rohr (12, 13) über seine gesamte axiale Länge glattzylindrisch ausgebildet ist.

10. Anordnung (10) aus zwei Abwasser-Rohren (12, 13) gemäß Schutzanspruch 9 und einem diese verbindenden Dichtring (20) gemäß einem der Ansprüche 1- 7.

## Claims

1. Gasket (20) for a pipe connection between two pipe ends (16, 17) respectively having a circumferential axial groove (22, 23) in their end faces (18, 19), comprising
two cylindrical axial webs (30, 31) adapted to be inserted into the axial grooves (22, 23) of the pipe, and
a radial web (32, 33) between both axial webs (30, 31), adapted to space the pipe ends (16, 17) from each other,
wherein the gasket profile (20) is formed by a hollow profile (40) with a wall (41) made of a wall material, wherein, in the region of the axial webs (30, 31), the hollow profile (40) is filled with a filling (50, 51) that is different from the material of the wall (41) of the hollow profile (40),
**characterized in that**
the radial web (32, 33) is formed as in integrated pressure transfer ring that also contains a filling (62) that is different from the material of the wall (41) of the hollow profile (40).

2. Gasket (20) of claim 1, wherein one radial web (32, 33), respectively, is provided radially outward and radially inward of the axial webs (30, 31) so that the cross-sectional profile of the gasket (20) is cross-shaped.

3. Gasket (20) of claim 1 or 2, wherein the material of the hollow profile wall (41) is rubber of plastic material.

4. Gasket (20) of one of claims 1 - 3, wherein the material of the hollow space filling (50, 51, 62) is rubber, plastics material or steel.

5. Gasket (20) of one of claims 1 - 4, wherein the material of the radial web filling (62) is resilient and different from the material of the filling (50, 51) in the axial webs (30, 31).

6. Gasket (20) of one of claims 1 - 5, wherein the axial webs (30, 31) are formed a lip seals and comprise annular radial sealing lips (71, 72, 73, 74).

7. Gasket (20) of one of claims 1- 5, wherein the axial webs are designed as compression joints without sealing lips.

8. Wastewater pipe (12, 13) of stoneware, comprising two identical pipe ends (16, 17), each having a circumferential annular axial groove (22, 23) of the same diameter provided in their end faces (18, 19), wherein two adjoining pipe ends (16, 17) of two wastewater pipes (12, 13) are adapted to be joined by means of a gasket (20) according to one of claims 1 - 7.

9. Wastewater pipe (12, 13) of claim 8, wherein the wastewater pipe (12, 13) is smoothly cylindrical over its entire axial length.

10. Arrangement (10) of two wastewater pipes (12, 13) according to claim 9 and a gasket (20) according to one of claims 1 - 7 joining the same.

## Revendications

1. Bague d'étanchéité (20) pour raccord de tuyauteries entre deux extrémités de tuyauterie (16, 17), lesquelles présentent sur leurs faces avant (18, 19) respectives une rainure axiale (22, 23) périphérique, la bague d'étanchéité comprenant
deux tiges axiales (30, 31) cylindriques aptes à s'engager dans les rainures axiales (22, 23) des tuyauteries, et
une tige radiale (32, 33) entre les deux tiges axiales (30, 31), apte à espacer les extrémités (16, 17) des tuyauteries,
le profilé d'étanchéité (20) étant formé par un profilé creux (40) dont la paroi (41) est réalisée dans un matériau de paroi, le profilé creux (40) étant rempli dans la région des tiges axiales (30, 31) d'une matière de remplissage (50, 51) différente du matériau de la paroi (41) du profilé creux (40),
**caractérisée en ce que**
la tige radiale (32, 33) est réalisée sous forme d'une bague de transmission de pression intégrée, qui contient également une matière de remplissage (62) différente du matériau de la paroi (41) du profilé creux (40).

2. Bague d'étanchéité (20) selon la revendication 1, dans laquelle une tige radiale (32, 33) est respectivement prévue radialement à l'extérieur et radialement à l'intérieur des tiges axiales (30, 31) de sorte que le profil de section transversale de la bague d'étanchéité (20) est cruciforme.

3. Bague d'étanchéité (20) selon la revendication 1 ou 2, dans laquelle le matériau de la paroi (41) du profilé creux est un caoutchouc ou une matière plastique.

4. Bague d'étanchéité (20) selon l'une des revendications 1 à 3, dans laquelle le matériau du remplissage (50, 51, 62) de l'espace creux est un caoutchouc, une matière plastique ou un acier.

5. Bague d'étanchéité (20) selon l'une des revendications 1 à 4, dans laquelle le matériau du remplissage (62) de la tige radiale est élastique et différent du matériau du remplissage (50, 51) des tiges axiales (30, 31).

6. Bague d'étanchéité (20) selon l'une des revendications 1 à 5, dans laquelle les tiges axiales (30, 31) sont réalisées sous forme de joints à lèvres et présentent des lèvres d'étanchéité (71, 72, 73, 74) radiales annulaires.

7. Bague d'étanchéité (20) selon l'une des revendications 1 à 5, dans laquelle les tiges axiales sont réalisées sous forme de joints de compression exempts de lèvres d'étanchéité.

8. Conduite d'eaux usées (12, 13) en grès cérame, comprenant deux extrémités (16, 17) de conduites identiques qui présentent respectivement, sur leurs faces avant (18, 19) une rainure axiale (22, 23) circulaire périphérique de même diamètre, deux extrémités (16, 17) adjacentes de deux conduites d'eaux usées (12, 13) pouvant être reliées entre elles au moyen d'une bague d'étanchéité (20) selon l'une des revendications 1 à 7.

9. Conduite d'eaux usées (12, 13) selon la revendication 8, dans laquelle la conduite d'eaux usées (12, 13) est cylindrique et lisse sur toute sa longueur axiale.

10. Agencement (10) constitué de deux conduites d'eaux usées (12, 13) selon la revendication sous protection 9 et d'une bague d'étanchéité (20) selon l'une des revendications 1 à 7 qui relie celles-ci.
